# EUROPÄISCHE PATENTSCHRIFT

(11) **EP 3 787 455 B1**
(45) Veröffentlichungstag und Bekanntmachung des Hinweises auf die Patenterteilung: **29.11.2023**
(21) Anmeldenummer: 19719457.4
(22) Anmeldetag: 16.04.2019
(51) Int. Cl.: A47L 9/00

(54) **SAUGROBOTER ZUM AUTONOMEN REINIGEN EINES FAHRZEUGINNENRAUMS**
CLEANING ROBOT FOR AUTONOMOUS CLEANING OF A VEHICLE INTERIOR
ROBOT NETTOYEUR POUR LE NETTOYAGE AUTONOME D'UN INTÉRIEUR DE VÉHICULE

(30) Priorität: 02.05.2018 DE 102018206772
(43) Veröffentlichungstag der Anmeldung: 10.03.2021
(73) Patentinhaber: VOLKSWAGEN AKTIENGESELLSCHAFT, 38440 Wolfsburg (DE)
(72) Erfinder: WEICKUM, Matthias, 38118 Braunschweig (DE); NEUMANN, Thomas, verstorben (DE); JANKE, Toni, 19209 Lützow (DE); WELP, Ralf, 38116 Braunschweig (DE)
(86) Internationale Anmeldenummer: PCT/EP2019/059768
(87) Internationale Veröffentlichungsnummer: WO 2019/211093

(56) Entgegenhaltungen:
- EP-A1- 1 913 856
- WO-A1-2016/165772
- DE-A1-102008 003 796
- US-A1- 2010 108 098
- US-B1- 6 553 612

## Beschreibung

Die Erfindung betrifft einen Saugroboter zum autonomen Reinigen eines Fahrzeuginnenraums eines Kraftfahrzeugs gemäß dem Oberbegriff des Anspruchs 1.

Üblicherweise werden Fahrzeuginnenräume von Kraftfahrzeugen derzeit manuell mit Staubsaugern gereinigt, die entweder transportabel sind und als Ganzes in der Hand gehalten werden oder lange, flexible Schläuche aufweisen, an deren Ende eine Saugdüse angeordnet ist. Ein derartiges Reinigen eines Fahrzeuginnenraums ist mühsam, da die ausführende Person sich innerhalb des Fahrzeugs befinden muss und mit dem Handstaubsauger oder dem Schlauch die zu reinigende Oberfläche abarbeiten muss. Aufgrund der beengten Raumverhältnisse besonders im Sitzbereich eines PKW ist das Durchführen einer solchen Reinigung sehr unkomfortabel.

Für Gebäudeinnenräume sind Saugroboter inzwischen relativ weit verbreitet. Allerdings sind hier im Regelfall relativ große ebene Bereiche ohne Hindernisse zu reinigen. Darüber hinaus müssen solche Saugroboter große Flächen in einer akzeptablen Zeit reinigen und entsprechend auch eine relativ hohe Kapazität für aufgenommenen Staub sowie große Energiespeicher aufweisen, um eine akzeptable Reichweite zu erreichen. Daraus folgt, dass bekannte zur Raumreinigung eingesetzte Saugroboter im Regelfall deutlich zu groß sind, um in einem Fahrzeuginnenraum eingesetzt zu werden. Ein einfaches Herunterskalieren eines bekannten Saugroboters ist aber nicht ausreichend, da für einen Einsatz im Kraftfahrzeug der Saugroboter sehr wendig und in der Lage sein muss, unterschiedliche Arten von Hindernissen zu überwinden oder zu umgehen. Weiterhin muss eine hohe Saugleistung beibehalten bzw. die Saugleistung sogar erhöht werden, um den Einsatz im Kraftfahrzeuginnenraum sinnvoll werden zu lassen, da hier aufgrund des Untergrunds und der Art einer typischen Verschmutzung oft eine besonders hohe Saugleistung notwendig ist.

Ein für den Einsatz in einem Fahrzeuginnenraum konstruierter Saugroboter ist aus der CN 206484560 U bekannt. Der in diesem Dokument beschriebenen Saugroboter weist ein Gehäuse mit einem Gehäusegrundkörper auf, von dem aus insgesamt vier sogenannte Arbeitsarme hervorstehen, an deren Unterseite jeweils eine Saugdüse angeordnet ist. Die Saugdüsen sind dabei parallel zum Boden in einer Höhe von einigen Millimetern über dem Boden angeordnet und saugen Staub an, der von einer zentral unter dem Gehäusegrundkörper angeordneten Bürste aufgewirbelt wird. Der Saugroboter steht auf zwei Kettenantrieben, die ein Manövrieren des Saugroboters ermöglichen. Der in diesem Dokument beschriebene Saugroboter ist wenig kompakt aufgebaut und nicht in der Lage, Hindernisse, die eine Höhe von wenigen Millimetern überschreiten, zu überqueren. Ebenfalls verteilt sich die zur Verfügung stehende Saugleistung auf die vier Saugdüsen, was ein aufwändiges Aufwirbeln des zu entfernenden Schmutzes mittels der Bürste erfordert.

Die WO 2016/165772 A1 beschreibt einen Reinigungsroboter und ein Steuerungsverfahren für diesen. Der Reinigungsroboter ist zur Reinigung einer Wohnung bestimmt. Er kann über WLAN und ein Mobiltelefon gesteuert werden.

In der US 2010/0108098 A1 wird eine Reinigungsdüse beschrieben, mit welcher große und kleine Partikel eingeschraubt werden können. Damit große Partikel eingesaugt werden können, ohne die Reinigungsdüse vom Boden abzuheben, kann ein in Düsenbewegungsrichtung vorderer Randbereich der Reinigungsdüse sensorgesteuert verschwenkt und an eine Düsenunterseite angelegt werden, so dass der Randbereich die Aufnahme der großen Partikel nicht behindert.

Einen Roboterstaubsauger erwähnt die US 6 553 612 B1. Bei ihm wird während des Saugbetriebs der angesaugte Schmutz in einem Fliehkraftabscheider am Rand eines Schmutzsammelbehälters rotierend gesammelt, wobei durch das Zentrum des Sammelbehälters weiterer Schmutz dem Sammelbehälter zugeführt werden kann, ohne dass dieser verstopft.

Die EP 1 913 856 A1 beschreibt ein kompaktes Saugreinigungsgerät, dessen Grundfläche 1.000 cm² bis 1.500 cm², das von ihm ausgefüllte Volumen 15 bis 25 Liter und seine maximale Gerätehöhe 180 mm betragen.

Einen drucksensiblen Foliensensor zur Anbringung an der Oberfläche eines autonom arbeitenden Bodenreinigungsgeräts offenbart die DE 10 2008 003 796 A1. Der Foliensensor kann Hindernisse erkennen und besteht aus zwei gegenseitig auf Abstand gehaltenen, elektrisch leitenden Folien, die unter Druck zur gegenseitigen Anlage gebracht werden können und somit eine elektrische Schaltfunktion auslösen. Dadurch kann das Auftreffen an einem Hindernis signalisiert und von einer Auswerteschaltung weiterverarbeitet werden.

Die Aufgabe der vorliegenden Erfindung besteht daher darin, einen Saugroboter anzugeben, der klein, robust, kompakt und saugstark ist, so dass ein autonomer Einsatz in einem Fahrzeuginnenraum bei gleichzeitig effektiver Reinigung möglich wird.

Die Aufgabe wird gelöst durch einen gattungsgemäßen Saugroboter mit den Merkmalen des Patentanspruchs 1.

Das Gehäuse des Saugroboters weist einen kompakten Gehäusegrundkörper auf. Die Saugdüse des Saugroboters ist an der Gehäuseunterseite des Gehäusegrundkörpers angeordnet, wobei der Abstand eines zu einem zweiten Rand des Gehäuses weisenden Rands einer Ansaugöffnung der Saugdüse von einem dem zweiten Rand des Gehäuses gegenüber liegenden ersten Rand des Gehäuses zumindest das 4-fache, bevorzugt zumindest das 6-fache, besonders bevorzugt zumindest das 9-fache eines Abstandes des Rands der Saugdüse von dem zweiten Rand des Gehäuses beträgt. Andere Faktoren für besagten Abstand sind natürlich ebenfalls möglich, so sind beispielsweise auch Ausführungsformen denkbar, in denen der Abstand zwischen dem Rand der Saugdüse und dem ersten Rand des Gehäuses zumindest das 5-fache, das 7-fache oder das 8-fache des Abstandes zwischen dem Rand der Saugdüse und dem zweiten Rand des Gehäuses beträgt.

Unter einem Rand des Gehäuses bzw. der Saugdüse wird dabei insbesondere der Verlauf einer Begrenzung des Gehäuses bzw. der Saugdüse in einer Projektion senkrecht von oben auf einen ebenen Untergrund verstanden. Der erste Rand des Saugroboters kann auch als hinterer Rand des Saugroboters bezeichnet werden. Der zweite Rand des Saugroboters kann auch als vorderer Rand des Saugroboters bezeichnet werden. Die Begriffe "vorne" und "hinten" orientieren sich dabei an einer primären Fortbewegungsrichtung des Saugroboters.

Unter einer Saugdüse an sich wird dabei insbesondere eine Öffnung mit einem freien Querschnitt verstanden, in dem keine weiteren beweglichen Elemente angeordnet sind, und die direkt mit dem Saugtrakt des Saugroboters verbunden ist. Insbesondere kann die Saugdüse so ausgestaltet sein, dass innerhalb des Querschnitts der Saugdüse beispielsweise keine rotierenden, oszillierenden oder auf sonstige Art beweglichen Bürsten angeordnet sind. Die Saugdüse kann insbesondere durch eine ebene Ansaugöffnung beschrieben werden, aus deren offenem Querschnitt keinerlei weitere Bauteile aus dem Gehäuse des Saugroboters hinausragen.

Ein erfindungsgemäßer Saugroboter ist insbesondere in der Lage, durch eine reine Saugwirkung den zu entfernenden Schmutz durch die Saugdüse einzusaugen. Eine mechanische Bewegung des Schmutzes mit Hilfe von Bürsten oder anderen Hilfsmitteln ist dazu nicht notwendig.

Vorzugsweise ist der Saugmotor besonders leistungsstark ausgelegt, beispielsweise kann der Saugmotor eine Leistung von zumindest 30 W aufweisen. Ein solch starker Saugmotor macht es möglich, dass auf eine Bürste, die den Schmutz zu der Ansaugöffnung transportiert, verzichtet werden kann. Bedingt dadurch, dass in Kraftfahrzeugen nur relativ kleine Flächen gereinigt werden müssen, sind relativ kurze Akkulaufzeiten akzeptabel, was ebenfalls dazu beiträgt, dass ein leistungsstarker Saugmotor mit einem insgesamt sehr kleinen und kompakten Saugroboter kombiniert werden kann.

Ein solcher Saugroboter ist sehr kompakt und konzentriert die zur Verfügung stehende Saugleistung auf eine einzelne Saugdüse. Diese wiederum ist derart am Rand des Robotergehäuses angeordnet, dass der Saugroboter die zu reinigende Oberfläche nahezu vollständig reinigen kann, da abhängig von der Ausgestaltung der Saugdüse nur ein kleiner Überstand des Gehäuses oder überhaupt kein Überstand des Gehäuses vorliegt, so dass die Saugdüse nahezu alle zu reinigenden Bereiche der Oberfläche erreicht. Ebenso sind keine Bürsten, die unterhalb des Saugrobotergehäuses oder an den Seiten angebracht sind notwendig, um den Schmutz aufzuwirbeln oder zu einer Saugdüse hin zu transportieren.

Eine besonders nahe am Rand des Gehäuses liegende Saugdüse wird erhalten, wenn der Abstand des zu dem zweiten Rand des Gehäuses weisenden Rands der Ansaugöffnung der Saugdüse von dem dem zweiten Rand des Gehäuses gegenüberliegenden ersten Rand des Gehäuses zumindest das 12-fache oder sogar zumindest das 16-fache beträgt. Der Abstand zwischen einem äußeren Rand der Saugdüse und einem äußeren Rand des Gehäuses kann weniger als 1 cm oder sogar weniger als 0,5 cm betragen. Wenn die Saugdüse am äußersten Rand des Gehäuses angeordnet ist oder sogar leicht hervorsteht kann der Abstand zwischen dem äußeren Rand der Saugdüse und dem äußeren Rand des Gehäuses sogar gleich Null sein.

Um einen besonders wendigen Saugroboter zu erhalten, ist es von Vorteil, wenn das Gesamtvolumen des Saugroboters weniger als 1000 cm³, bevorzugt weniger als 750 cm³, besonders bevorzugt weniger als 500 cm³ beträgt. Die kleineren Abmaße begünstigen dabei das Reinigen von verwinkelten Böden, wie sie beispielsweise in den Fußräumen von Kraftfahrzeugen regelmäßig vorkommen. Konkrete Werte für die Maße können beispielsweise eine Länge von 10 bis 14 cm, bevorzugt von 10 bis 12 cm, eine Breite von 8 bis 12 cm, bevorzugt von 9 bis 11 cm, und eine Höhe von weniger als 8 cm, bevorzugt weniger als 6 cm, sein. Entsprechend beträgt eine Grundfläche, die der Saugroboter einnimmt, weniger als 200 cm², bevorzugt kann sie weniger als 150 cm², und besonders bevorzugt weniger als 120 cm² betragen.

In einer zweckmäßigen Ausgestaltung der Erfindung liegt der zweite Rand des Gehäuses in einer primären Fahrtrichtung vorne. Mit anderen Worten ist also auch die Saugdüse im vorderen Bereich des Saugroboters angeordnet. Unter einer primären Fahrtrichtung wird dabei insbesondere eine Fahrtrichtung verstanden, die der Roboter einsetzt, wenn eine Fläche zu reinigen ist, auf der kein Hindernis vorhanden ist, der Roboter seine Fahrt also ungehindert durchführen kann. Die primäre Fahrtrichtung kann auch Hauptreinigungsrichtung genannt werden. Andere Fahrtrichtungen können als Rückwärtsrichtung oder als Manövrierrichtungen bezeichnet werden. Ein typisches Fahrmanöver des Saugroboters besteht aus einer Bewegung in die primäre Fahrtrichtung, bis der Roboter gegen ein Hindernis prallt. Der Saugroboter hält dann an, fährt für eine kleine Strecke rückwärts, also entgegen gesetzt der primären Fahrtrichtung, dreht sich dann um einen ggf. zufälligen Winkelbetrag und setzt seine Fahrt dann erneut in der primären Fahrtrichtung fort, bis er wieder gegen ein Hindernis stößt.

Wenn die Düse am in Fahrtrichtung gesehen vorderen Rand des Saugroboters angeordnet ist, ergibt sich der Vorteil, dass bei einem einfachen Zufahren auf eine Begrenzung des zu reinigenden Bereichs dieser Bereich vollständig oder zumindest nahezu vollständig gereinigt wird. Wäre die Saugdüse im mittleren oder im hinteren Bereich des Saugroboters angeordnet, so müsste der Roboter entweder erst wenden, seitlich an der Begrenzung entlangfahren, oder es wäre überhaupt keine vollständige Reinigung bis an die Begrenzung möglich. Es ergibt sich so also eine effiziente Reinigung, die eine Energieeinsparung sowie eine verkürzte Reinigungsdauer ermöglicht.

Eine vorteilhafte Weiterbildung der Erfindung sieht vor, dass das Gehäuse einen sich in einer Draufsicht gesehen zu dem zweiten Rand des Gehäuses hin verjüngenden Abschnitt, in dem die Saugdüse angeordnet ist, aufweist, wobei die Seitenflächen des sich verjüngenden Abschnittes mit der primären Fahrtrichtung des Saugroboters jeweils einen Winkel von weniger als 75°, bevorzugt weniger als 55°, besonders bevorzugt weniger als 40° bilden. Mit anderen Worten läuft das Gehäuse des Saugroboters nach vorne hin spitz zu, wobei das äußere Ende der Spitze wiederum abgeflacht sein kann. Die Breite des Saugroboters ist somit in dem Bereich, in dem die Saugdüse angeordnet ist, verringert, so dass der Saugroboter flexibel auch in Ecken gelangt und sich dort befindenden Schmutz aufsaugen kann.

Entsprechend ist es möglich, dass der zweite Rand des Gehäuses eine Breite aufweist, die weniger als 60%, bevorzugt weniger als 50%, besonders bevorzugt weniger als 40% einer Gesamtbreite des Saugroboters beträgt. Von oben betrachtet kann die Form des Saugroboters beispielsweise als aus einem Rechteck, das den hinteren Teil des Saugroboters bildet, und einem Trapez, das den vorderen Teil mit der Saugdüse bildet, zusammengesetzt angesehen werden. Die Saugdüse ist dabei im Bereich der kurzen Seite des Trapezes angeordnet. Dabei kann die Saugdüse eine Breite von zumindest 25 %, zumindest 35% oder zumindest 45% der Gesamtbreite des Saugroboters aufweisen. Auf diese Weise wird sichergestellt, dass auch eine größere Fläche gereinigt werden kann, ohne, dass der Saugroboter allzu oft hin- und herfahren müsste. In absoluten Zahlen kann die Saugdüse eine Breite von beispielsweise 20 bis 70 mm, 30 bis 60 mm oder 30 bis 45 mm aufweisen. Als sinnvolle Breite für die Saugdüse hat sich beispielsweise ein Wert von 35 mm erwiesen.

Es kann vorgesehen sein, dass die Saugdüse in einem mittleren Bereich des zweiten Rands angeordnet ist. Die Saugdüse liegt dann also im mittleren Bereich der Vorderseite des Saugroboters. Auf diese Art und Weise sind die zu reinigenden Flächen einfach anfahrbar und es wird möglich, auch Ecken auf einfache Art und Weise zu reinigen. In einer alternativen Ausgestaltung ist es auch denkbar, dass die Saugdüse in einem Eckbereich des Gehäuses angeordnet ist. Dies muss dann bei der Programmierung des Fahrmusters des Saugroboters berücksichtigt werden. Der Saugroboter kann dann von oben gesehen eine grob quadratische oder rechteckige Form haben und dennoch in der Lage sein, auch die Ecken des zu reinigenden Bereichs zu erreichen.

In einer vorteilhaften Ausgestaltung der Erfindung ist vorgesehen, dass der Saugroboter in einem Regelbetrieb mit zumindest zwei Fortbewegungsmitteln und einer Unterseite der Saugdüse in mechanischem Kontakt mit einer zu reinigenden Oberfläche steht. Der Saugroboter stützt sich dann also über die Saugdüse auf dem zu reinigenden Boden ab. Dies vereinfacht zum einen das Fortbewegungskonzept des Saugroboters und bringt zum anderen die Öffnung der Saugdüse automatisch in unmittelbarer Nähe des aufzunehmenden Schmutzes, sodass sich eine qualitativ hochwertige Reinigung ergibt.

Die Fahreinheit des Saugroboters kann durch diese Fortbewegungsmittel gebildet sein. Die Fortbewegungsmittel können dabei beispielsweise Räder oder die Ketten eines Kettenantriebs sein. Der Saugroboter ist dann so ausgestaltet, dass zumindest zwei angetriebene Fortbewegungsmittel vorhanden sind und ein dritter Auflagepunkt des Saugroboters von der Saugdüse gebildet wird. Die Saugdüse gleitet dann im Reinigungsbetrieb über den zu reinigenden Boden. Die beiden Fortbewegungsmittel können unabhängig voneinander antreibbar sein, so dass der Saugroboter auch Drehungen sowie Wechsel der Fahrtrichtung durchführen kann. Die Fahreinheit kann somit beispielsweise 2, 3 oder 4 Räder sowie einen Antriebsmotor oder eine der Anzahl der Räder entsprechende Anzahl an Antriebsmotoren aufweisen, wobei dann jedem Rad genau einer der Antriebsmotoren zugeordnet ist. Prinzipiell ist es auch möglich, dass lediglich ein Rad bzw. ein Fortbewegungsmittel von einem Motor angetrieben wird. Entsprechend ist dann auch nur ein Antriebsmotor vorhanden. Der Saugroboter kann dann beispielsweise über Schwerpunktverlagerungen gelenkt werden. Ebenfalls ist es denkbar, dass lediglich ein Fortbewegungsmittel vorhanden ist. Der Saugroboter weist dann lediglich ein einzelnes Rad oder einen einzelnen Kettenantrieb auf. Das Fortbewegungsmittel kann dann drehbar ausgestaltet sein, um unterschiedliche Bewegungsrichtungen zu ermöglichen.

Um das Gleiten der Saugdüse über den Boden zu erleichtern, kann die Saugdüse aus der Gehäuseunterseite nach unten hervorstehen und zumindest zwei Seitenflächen aufweisen, die mit der Horizontalen jeweils einen freien Winkel von weniger als 80°, bevorzugt von weniger als 65°, besonders bevorzugt von weniger als 50°, bilden. Mit anderen Worten sind die betreffenden Seitenflächen dann so angeschrägt, dass sie gegenüber senkrechten Seitenflächen einen verminderten Gleitwiderstand der Saugdüse auf dem Boden verursachen. In einer besonders vorteilhaften Ausgestaltung sind alle Seitenflächen, insbesondere also alle vier Seitenflächen bei einer im wesentlichen rechteckigen Saugdüse, entsprechend angeschrägt bzw. bilden die weiter oben beschriebenen Winkel mit der Horizontalen. Die Saugdüse kann auch eine grob kegelförmige Form oder eine Mischform, die Eigenschaften eines Kegels und Eigenschaften eines Quaders aufweist, haben. Ebenfalls von Vorteil ist es, wenn die Kanten der Saugdüse und insbesondere die Kanten der Ansaugöffnung der Saugdüse abgerundet sind. Auch so wird der Gleitreibungswiderstand verringert.

Gemäß einer speziellen Ausgestaltung kann die in der primären Fahrtrichtung gesehen vordere äußere Kante der Saugdüse profiliert sein. Die Profilierung kann kammartig oder durch kleine Ausnehmungen, die in regelmäßigen oder unregelmäßigen Abständen vorgesehen sind, ausgestaltet sein. Die Saugdüse steht dann zuverlässig nicht über ihre gesamte Breite in Kontakt mit dem zu reinigenden Boden, was für die Bewegung des Saugroboters von Vorteil sein kann. Ebenso kann auf diese Weise sicher verhindert werden, dass der Saugroboter sich am Boden festsaugt und so die Bewegung eingeschränkt wird.

Die Saugdüse kann aus Kunststoff hergestellt sein. Sie kann eine gleitfähige bzw. reibungsarme Beschichtung aufweisen. Ebenfalls kann die Saugdüse aus einem Metall, das insbesondere poliert sein kann, hergestellt sein.

Eine Ausgestaltung mit besonders hoher Saugleistung ergibt sich, wenn der Strömungsweg für den von der Saugdüse zu dem Lüfterrad verlaufenden Luftstrom zwischen der Saugdüse und dem Lüfterrad in einer Projektion auf die Gehäuseunterseite gesehen eine maximale Änderung einer Hauptströmungsrichtung des Luftstroms von insgesamt weniger als 30°, bevorzugt von weniger als 15°, besonders bevorzugt von weniger als 5° erfährt. Mit anderen Worten muss der Luftstrom abgesehen von einer Umlenkung in die Horizontale nicht oder nur unwesentlich umgelenkt werden, um von der Saugdüse bis zu dem Lüfterrad zu gelangen. In einer speziellen Ausgestaltung kann der Luftstrom sich von der Saugdüse zu dem Lüfterrad geradlinig bewegen und muss überhaupt keine Richtungsänderung vornehmen. Der Saugtrakt ist dann ein gerader Kanal, der keine Ecken oder Kurven aufweist. Da die Saugdüse den Schmutz vom Boden aufnimmt und zwangsläufig zumindest für eine geringe Distanz vertikal in das Gehäuse saugen muss, muss in jedem Fall zunächst eine Umlenkung des Luftstroms in eine Richtung, die zumindest grob einer Horizontalen entspricht, erfolgen. Diese Umlenkung soll bei den obigen Winkelwerten explizit nicht mit erfasst werden. Wenn der Saugmotor vertikal über der Ansaugöffnung angeordnet ist, kann ein Saugroboter konstruiert werden, bei dem der Strömungsweg vollständig geradlinig verläuft und auch die angesprochene primäre Umlenkung aus der Vertikalen in eine horizontale Strömungsrichtung vermieden werden kann.

Eine entsprechende Anordnung kann beispielsweise erreicht werden, wenn das Lüfterrad in der Nähe des ersten Rands des Gehäuses, der sich am in der primären Fahrtrichtung gesehen hinteren Ende des Saugroboters befindet, angeordnet ist. Mit anderen Worten befinden sich die Saugdüse und das Lüfterrad dann an einander gegenüberliegenden Seiten des Saugroboters. Hierfür kann vorgesehen sein, dass der Abstand des Schwerpunkts des Lüfterrads von dem Mittelpunkt der Saugdüse zumindest 50 %, bevorzugt 70% und besonders bevorzugt 80% der Gesamtlänge des Saugroboters beträgt. Das Lüfterrad erzeugt den durch die Saugdüse und den Saugtrakt des Saugroboters verlaufenden Luftstrom. Es wird von einem Saugmotor angetrieben und kann mit diesem zu einer kompakten Einheit zusammengefasst sein. In diesem Fall kann der Saugmotor in Saugluftstromrichtung der durch das Lüfterrad strömenden Luft gesehen hinter dem Lüfterrad angeordnet sein. Es ist aber ebenfalls möglich, den Saugmotor versetzt neben, über oder unter dem Lüfterrad anzuordnen und das Lüfterrad dann über eine Welle oder ein Getriebe anzutreiben. Zwischen der Saugdüse und dem Lüfterrad können das Schmutzreservoir, ein Filter und ggf. eine Schmutzrückhaltevorrichtung, z.B. in Form eines Kunststoff- oder Silikonlappens, angeordnet sein. Prinzipiell kann auch der Saugmotor im Luftstrom zwischen der Saugdüse und dem Lüfterrad angeordnet sein.

Eine kompakte und gut balancierte Ausgestaltung ergibt sich, wenn der Luftstrom von der Saugdüse durch einen zentralen Bereich des Gehäuses in Richtung des ersten Rands des Gehäuses strömt und auf beiden Seiten des Luftstroms Energiespeicher angeordnet sind. Mit anderen Worten sind von oben gesehen rechts und links des Saugkanals Energiespeicher, beispielsweise in Form von Akkumulatoren, angeordnet. Da die Akkumulatoren einen relativ großen Anteil des Gewichts des gesamten Saugroboters ausmachen, ergibt sich so eine gute Balance und Symmetrie des Saugroboters. Weiterhin wird auf diese Art und Weise Platz für den zentralen Saugkanal geschaffen.

Eine vorteilhafte Weiterbildung der Erfindung sieht vor, dass am zweiten Rand des Gehäuses ein drucksensitives Element oder mehrere drucksensitive Elemente angeordnet sind, um Berührungen des Saugroboters mit der Umgebung zu detektieren. Vorteilhafterweise können an dem zweiten Rand des Gehäuses zwei drucksensitive Elemente angebracht sein, die eingerichtet sind, um einen Kontakt des Saugroboters mit einem Hindernis zu registrieren, wobei die beiden drucksensitiven Elemente übereinander angeordnet sind. Es kann so grob die Höhe des Hindernisses abgeschätzt werden und entsprechend entschieden werden, ob das Hindernis überwunden werden kann, und, falls dies der Fall ist, eine entsprechende Bewegungsstrategie ausgewählt werden. So kann zum Beispiel vorgesehen sein, dass überwindbare Hindernisse rückwärts angefahren werden. Hierzu kann der Gehäuseboden im hinteren Bereich, also im Bereich des ersten Rands, gegenüber der Horizontalen leicht geneigt verlaufen, so dass sich die Bodenfreiheit im Randbereich vergrößert und auf die Hindernisse aufgefahren werden kann. Anstelle eines geneigten Verlaufs kann auch die Unterseite des Gehäuses in der primären Fahrtrichtung gesehen hinten zwar eben verlaufen, aber einen größeren Abstand zum Boden aufweisen als im vorderen Bereich. Hierzu kann ein stufenförmiger Verlauf der Gehäuseunterseite im Bereich des hinteren Bereichs der Räder vorgesehen sein, so dass der Saugroboter sich rückwärts einem Hindernis annähern kann und dann zuerst mit den Rädern in Kontakt mit dem Hindernis kommt. Die Saugdüse ist dann immer nahe an der zu reinigenden Oberfläche, bei einem Anfahren eines Hindernisses entgegen der primären Fahrtrichtung kann aber von der vergrößerten Bodenfreiheit profitiert werden. Wenn mehr als zwei drucksensitive Elemente eingesetzt werden, beispielsweise drei, vier oder noch mehr Elemente, so kann die Höhe und Form des Hindernisses genauer aufgelöst werden. Prinzipiell ist es auch denkbar, die drucksensitiven Elemente nicht nur übereinander, sondern auch nebeneinander anzuordnen, beispielsweise in Form einer Matrix. Es kann dann prinzipiell auch eine Information über die Breite des Hindernisses ermittelt werden.

Andere Strategien zum Überwinden von Hindernissen können beispielsweise ein drehmomentstarkes Anfahren in Vorwärtsrichtung sein, so dass sich der vordere Teil des Saugroboters kurzfristig vom Boden löst und so auf das Hindernis aufgesetzt werden kann, oder es kann eine Steighilfe aktiviert werden. Die Steighilfe kann zum Beispiel ein absenkbares, steifes Element sein, dass gegen den Boden gedrückt wird, so dass sich ein entsprechender Teil des Saugroboters vom Boden abhebt und auf diese Art und Weise auf das Hindernis aufgesetzt werden kann.

Die drucksensitiven Elemente können federnd ausgestaltet sein. Sie bieten dann gleichzeitig einen Schutz gegen Beschädigungen durch einen harten Aufprall des Saugroboters in Fahrtrichtung. Die Elemente können dabei ähnlich zu Stoßfängern eines Kraftfahrzeugs ausgestaltet sein und Teile der Vorderseite des Gehäuses des Saugroboters abdecken. Alternativ können die drucksensitiven Elemente auch die gesamte Vorderseite des Saugroboters abdecken oder sogar Teile der Seitenbereiche des Saugroboters ebenfalls abdecken. Hierzu können abgewinkelte und gegebenenfalls abgerundete Elemente vorgesehen sein. Die drucksensitiven Elemente sind dabei nicht nur auf einen Einsatz an der Vorderseite beschränkt, sondern können auch an der Rückseite des Saugroboters und/oder an den Seiten des Saugroboters eingesetzt werden. Auch hier können Drucksensoren eingesetzt werden, um die Steuereinheit in die Lage zu versetzen, auf Kontakt des Saugroboters mit Hindernissen reagieren zu können. Die Federkonstante des federnden Elements kann dabei an die Masse und eine typische Geschwindigkeit des Saugroboters angepasst sein, um einen wirkungsvollen Stoßdämpfer darzustellen und den Saugroboter vor Beschädigungen zu schützen.

Ein besonders flexibles Gerät ergibt sich, wenn ein Betreiben des Saugroboters in einem Handsaugmodus möglich ist, wobei in dem Handsaugmodus der autonome Antrieb des Saugroboters deaktiviert ist. Der Benutzer kann also den Handsaugmodus aktivieren und den Saugroboter wie einen herkömmlichen Handstaubsauger verwenden. Dies kann insbesondere sinnvoll sein, wenn Bereiche gereinigt werden sollen, die für den Saugroboter nicht zugänglich sind, oder wenn nach der automatischen Reinigung noch Verschmutzungen zurückgeblieben sind. Um den genannten Handsaugmodus für den Benutzer komfortabel durchführbar zu machen, kann das Gehäuse einen Handgriff oder eine Handschlaufe aufweisen. Der Handgriff kann beispielsweise ausklappbar und im Gehäuse versenkbar sein, wenn er nicht benötigt wird. Ebenso kann das Gehäuse ergonomisch so ausgestaltet sein, dass ein Benutzer den Saugroboter komfortabel greifen, sicher halten und einfach positionieren kann. Hierfür können beispielsweise Griffmulden oder Ähnliches vorgesehen sein.

Das Schmutzreservoir des Saugroboters kann als integral mit dem Gehäuse verbundenes Schmutzreservoir ausgestaltet sein, das mit einem Deckel verschließbar ist. Es wird so der Bauraum für ein vollständig und im geschlossenen Zustand aus dem Gehäuse entnehmbares Schmutzreservoir eingespart. Aufgrund der geringen Maße und des geringen Gewichts des Saugroboters ist es für den Benutzer problemlos möglich, den gesamten Saugroboter beim Entleeren in der Hand zu halten. Die Klappe des Schmutzreservoirs kann dabei auf der Oberseite oder auf der Unterseite angeordnet sein. Prinzipiell ist eine Anordnung an einer Seitenfläche des Gehäuses natürlich ebenfalls denkbar.

Um die Saugleistung weiter zu erhöhen kann vorgesehen sein, dass der Saugmotor ein bürstenloser Motor ist. Solche Motoren sind aus dem Stand der Technik bekannt und in verschiedenen Größen und Leistungsstufen verfügbar.

Für eine einfache Bedienung des Saugroboters kann vorgesehen sein, dass an einer Oberseite oder einer Seitenfläche des Gehäuses ein Bedienungselement in Form eines Schalters und/oder eine Status-LED angeordnet ist. Der Schalter kann ein einfacher ein-/Aus-Schalter sein. Ebenfalls ist es möglich das der Schalter ein Taster oder ein Drehschalter ist, über den mehrere Funktionen ausgewählt werden können. Hierzu kann der Saugroboter beispielsweise auf ein längeres oder kürzeres Drücken des Tasters unterschiedlich reagieren. Ebenfalls können auch verschiedene Kombinationen einprogrammiert sein. So könnte beispielsweise bei einem kurzen Drücken des Tasters der automatische Saugmodus aktiviert werden, bei zweimaligem kurzen Drücken könnte ein Hochintensitätssaugmodus aktiviert werden, und bei einem langen Drücken des Tasters könnte der Handsaugmodus aktiviert werden.

In einer vorteilhaften Ausgestaltung weist der Saugroboter eine Sensorik zum Sammeln von Informationen über den zu reinigenden Bereich auf. Diese kann eine Vielzahl von gängigen Sensoren wie beispielsweise Infrarotsensoren, Lasersensoren, kapazitive Sensoren, mechanische, elektromechanische oder Ultraschallsensoren sowie Kombinationen der genannten Sensorarten umfassen. Anhand dieser Sensoren kann der Roboter zum einen Hindernisse oder Stufen erkennen, und zum anderen kann er vor dem und/oder während des Reinigens den zu reinigenden Bereich vermessen, eine entsprechende Reinigungsstrategie auswählen und sich nach Abschluss der Reinigung selbst abschalten.
Die Reinigungsstrategie kann dabei im einfachsten Fall ein chaotisches Abfahren für einen bestimmten Zeitraum beinhalten, ebenso kann aber auch vor dem Beginn der Reinigung eine effektive Reinigungsbahn berechnet werden.

Gemäß einer weiteren vorteilhaften Weiterbildung ist der Saugroboter derart ausgestaltet, dass er in einer passenden Ladestation aufgeladen werden kann. Die Ladestation kann beispielsweise im Kofferraum oder in einem Fußraum des Kraftfahrzeugs angeordnet sein. Nach Beendigung des Reinigungsprogramms oder wenn der Energiespeicher aufgeladen werden muss, kann der Saugroboter automatisch zu der Ladestation zurückkehren. Hier können die Energiespeicher des Saugroboters über elektrische Kontakte, die an einer Seite des Gehäuses, beispielsweise an der Gehäuseunterseite oder der Gehäuserückseite, angeordnet sind, oder gegebenenfalls auch induktiv aufgeladen werden. Ebenfalls ist es möglich, dass über einen entsprechenden Kontakt Steuersignale an den Roboter übermittelt werden, sodass beispielsweise ein Benutzer über einen vom Cockpit aus erteilten Steuerbefehl den Saugroboter in Betrieb setzen kann. Ebenfalls kann eine bidirektionale Verbindung vorgesehen sein, um beispielsweise dem Fahrer des Fahrzeugs Informationen über den Ladezustand des Energiespeichers zukommen zu lassen oder ein Signal zu senden, wenn das Schmutzreservoir geleert werden muss.

In Kombination mit der Ladestation oder anstelle der Ladestation kann eine Befestigungsvorrichtung vorgesehen sein, in die der Saugroboter eingesetzt werden kann, um ihn während der Fahrt zu fixieren. Es ist weiterhin ebenso möglich, dass der Saugroboter die Befestigungsvorrichtung selbsttätig ansteuern kann und in der Befestigungsvorrichtung automatisch gesichert wird.

In einer Weiterbildung kann der Saugroboter derart ausgestaltet sein, dass er sich in einem Ruhemodus an einem Wandelement oder einem Boden des Fahrzeugs arretieren kann oder arretiert werden kann, um seine Position auch während der Fahrt zu halten. Hierzu kann an dem Saugroboter ein Klammer-, Klett- oder Klemmmechanismus zum Befestigen des Roboters am Boden vorgesehen sein.

Ein besonders kompakter und robuster Saugroboter wird erhalten, wenn die Steuereinheit aus einer oder mehreren Platinen besteht, die kabellos miteinander verbunden sind. Falls mehrere Platinen vorhanden sind, können diese über eine Steckverbindung miteinander verbunden werden. Es kann auf diese Art und Weise Bauraum eingespart werden, der Aufwand bei der Endmontage verringert sich, und es werden Defekte beispielsweise durch Kabelbrüche oder Defekte an Lötstellen ausgeschlossen.

Die Saugdüse kann derart ausgestaltet sein, dass die durch die Saugdüse strömende Luftströmung unmittelbar nach Eintritt in die Ansaugöffnung quer zur Strömungsrichtung allseitig von Seitenwänden der Saugdüse umschlossen ist. Hierzu kann es zweckmäßig sein, wenn die Saugdüse einen aus der Gehäuseunterseite hervorstehenden Fortsatz bildet, so dass die Ansaugöffnung unterhalb der durch die Gehäuseunterseite gebildeten Ebene angeordnet ist. Die Ansaugöffnung kann dabei parallel zur Gehäuseunterseite oder geneigt angeordnet sein. Eine geneigte Ansaugöffnung kann sich dadurch auszeichnen, dass ihre vordere Kante, mit anderen Worten also die Kante, die zum zweiten Rand des Gehäuses hin weist, oberhalb der hinteren Kante angeordnet ist. Mit anderen Worten ist der Abstand zwischen der vorderen Kante der Saugdüse und dem Boden also größer als der Abstand zwischen der hinteren Kante der Saugdüse und dem Boden.

Die hintere Kante der Saugdüse kann in Kontakt mit dem Boden stehen. In einer speziellen Ausführungsform kann zusätzlich auch die vordere Kante der Saugdüse in Kontakt mit dem Boden stehen. Gleiches gilt für die seitlichen Kanten der Saugdüse. Die Saugdüse kann einen kurzen rohr- oder rüsselartigen Fortsatz bilden, der nach unten aus dem Gehäusegrundkörper herausragt.

Ausführungsbeispiele der Erfindung werden anhand der Zeichnungen und der nachfolgenden Beschreibung näher erläutert. Es zeigen:
- Fig. 1:: ein erstes Ausführungsbeispiel eines erfindungsgemäßen Saugroboters in einer perspektivischen Ansicht,
- Fig. 2:: eine schematische Darstellung des ersten Ausführungsbeispiels in einer Einsatzsituation,
- Fig. 3:: das erste Ausführungsbeispiel in einer Draufsicht,
- Fig. 4:: das erste Ausführungsbeispiel in einer Seitenansicht,
- Fig. 5:: ein zweites Ausführungsbeispiel eines erfindungsgemäßen Saugroboters in einer Seitenansicht,
- Fig. 6:: ein drittes Ausführungsbeispiel eines erfindungsgemäßen Saugroboters in einer Ansicht von unten,
- Fig. 7:: das dritte Ausführungsbeispiel in einer Seitenansicht,
- Fig. 8:: das dritte Ausführungsbeispiel in einer Ansicht von vorne,
- Fig. 9:: eine Darstellung einer Steuereinheit und Energieversorgung,
- Fig. 10:: die Steuereinheit und die Energieversorgung im Gehäusekontext,
- Fig. 11:: eine schematische Darstellung eines erfindungsgemäßen Saugroboters in einer Einsatzsituation,
- Fig. 12:: eine schematische Darstellung eines erfindungsgemäßen Saugroboters im Handsaugmodus,
- Fig. 13:: einen Querschnitt des dritten Ausführungsbeispiels, und
- FIg.14:: ein Detail eines vierten Ausführungsbeispiels eines erfindungsgemäßen Saugroboters im Querschnitt.

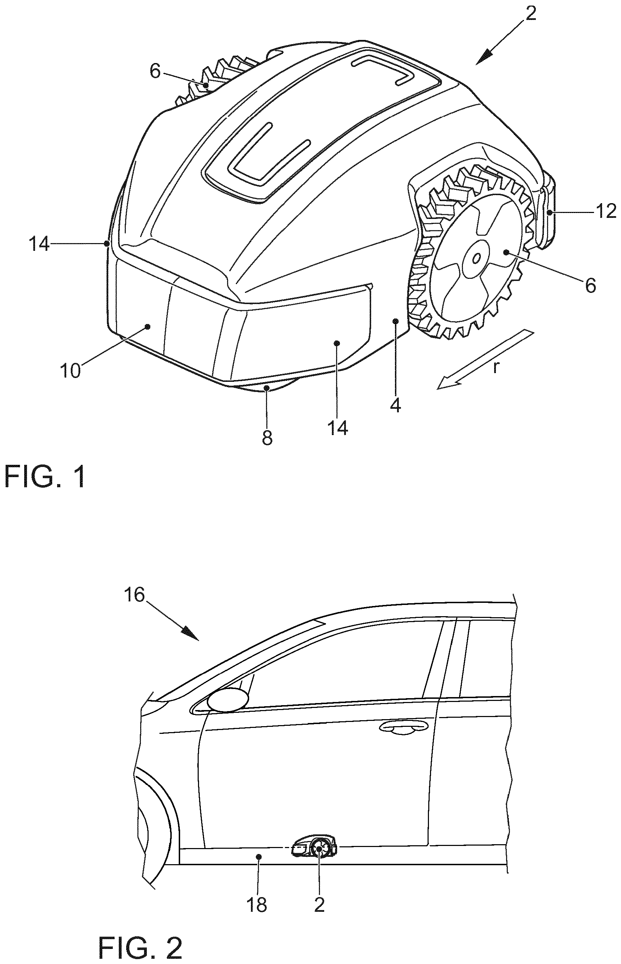

Figur 1 zeigt ein erstes Ausführungsbeispiel eines erfindungsgemäßen Saugroboters 2. Der Saugroboter 2 weist ein kompaktes Gehäuse 4 auf, in dem die weiteren Komponenten untergebracht sind. In Aussparungen, die an die Größe der Räder 6 angepasst sind, sind die beiden Räder 6 zu erkennen. Die Räder 6 haben einen relativ großen Durchmesser, der im dargestellten Ausführungsbeispiel etwa 80 % der Höhe des Saugroboters 2 beträgt. Die beiden Räder 6 bilden zusammen mit der Saugdüse 8, die am unteren Rand des Gehäuses 4 noch erkennbar ist, die Auflagepunkte des Saugroboters 2 auf dem Boden.

Der Saugroboter 2 weist an seiner Vorderseite ein federndes Element 10 auf, das nach Art eines Stoßfängers ausgestaltet ist und mit zumindest einem nicht dargestellten Sensor verbunden ist, der eine Berührung mit einem Hindernis oder einer Begrenzung des zu reinigenden Bereichs registriert. Die Sensordaten werden an die nicht dargestellte Steuerungseinheit weitergegeben. Wenn der Sensor eine Berührung mit einem Hindernis oder einer Begrenzung des zu reinigenden Bereichs registriert, stoppt der Saugroboter 2 dementsprechend die Vorwärtsbewegung und führt danach beispielsweise eine Rückwärtsbewegung und eine Drehbewegung aus, um danach die Reinigung in einer anderen Fahrtrichtung fortzusetzen. Das federnde Element 10 deckt dabei fast die gesamte Vorderseite sowie große Teile der vorderen Seitenflächen bis zu den Rädern 6 hin ab. Die vorderen Seitenflächen 14 sind dabei derart ausgestaltet, dass sich der Saugroboter 2 nach vorne von oben betrachtet verjüngt. Die vorderen Seitenflächen 14 bilden somit jeweils einen spitzen Winkel mit einer Fahrtrichtung r.

Es ist weiterhin zu erkennen, dass auch an der hinteren Seite des Saugroboters 2 ein analog zu dem federnden Element 10 ausgestaltetes Element 12 angebracht ist. Dieses Element 12 kann ebenfalls federnd ausgestaltet und mit einem weiteren Sensor verbunden sein.

Figur 2 veranschaulicht die Größenverhältnisse des Saugroboters 2 im Vergleich zu einem Einsatzort in Form eines Kraftfahrzeugs 16. Der Saugroboter, der beispielsweise eine Länge von 10-12 cm aufweisen kann, befindet sich im Fußraum 18 des Kraftfahrzeugs 16. Es lässt sich erkennen, dass der Saugroboter 2 mehr als das Vierfache seiner eigenen Länge zurücklegen kann, bevor er den Fußraum 18 vollständig durchquert hat.

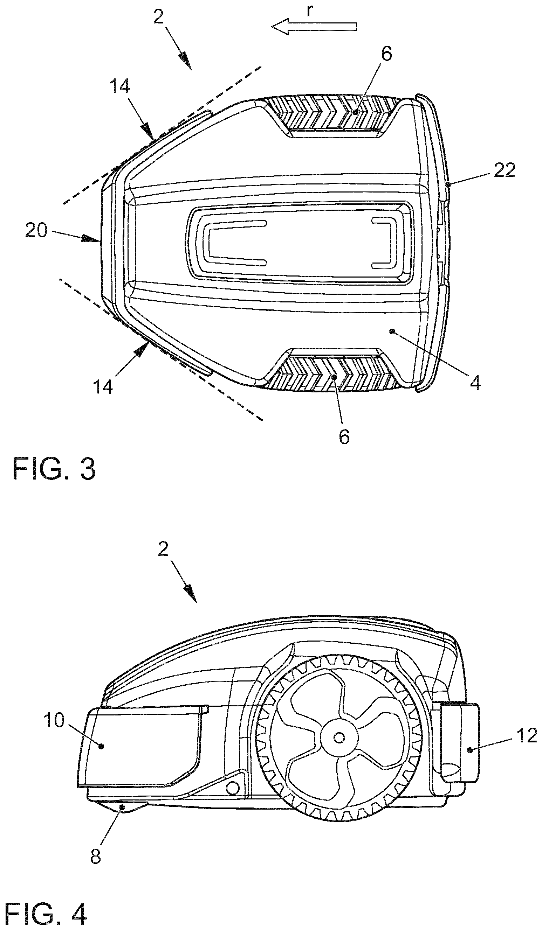

Figur 3 zeigt das Ausführungsbeispiel aus Figur 1 in einer Draufsicht. Der Verlauf der vorderen Seitenflächen 14 des Saugroboters 2 wurde anhand von gestrichelten Linien hervorgehoben. Die vorderen Seitenflächen 14 bilden mit der primären Fahrtrichtung r einen Winkel von etwa 40°. Die Vorderseite 20 des Saugroboters 2 ist durch den schrägen Verlauf der vorderen Seitenflächen 14 kürzer als die Rückseite 22 des Saugroboters 2. Die Länge der Vorderseite 20 beträgt im dargestellten Ausführungsbeispiel etwa 30 % bis 40 % der gesamten Breite des Saugroboters 2, die etwa der Länge der Rückseite 22 entspricht. Es ist weiterhin zu erkennen, dass die Räder 6 an ihrer Oberseite nicht von dem Gehäuse 4 überdeckt werden und somit nach oben hin frei liegen. Die Räder 6 weisen ein Profil auf, das für eine gute Kraftübertragung auf den Boden sorgt.

Figur 4 zeigt das Ausführungsbeispiel aus den Figuren 1 und 3 in einer Seitenansicht. Die Höhe des federnden Elements 10 beträgt in etwa die Hälfte der gesamten Höhe des Saugroboters 2. Gleiches gilt für die Höhe des Elements 12. Im unteren vorderen Bereich des Saugroboters 2 ist die Saugdüse 8 zu erkennen. Sie besteht aus einem Kunststoff und ist so ausgeformt, dass ihre Kanten mit dem nicht dargestellten Boden einen kleinen Winkel von etwa 10-30° bilden. Sowohl bei der Vorwärtsbewegung, also einer Bewegung in die primäre Fahrtrichtung, als auch bei der entgegengesetzten Bewegung, also der Rückwärtsbewegung, gleitet die Saugdüse 8 somit mit geringem Widerstand über den Boden und über kleinere Hindernisse und Unebenheiten hinweg. Ein Verhaken an solchen Hindernissen oder Unebenheiten wird durch die Geometrie der Saugdüse 8 sicher verhindert.

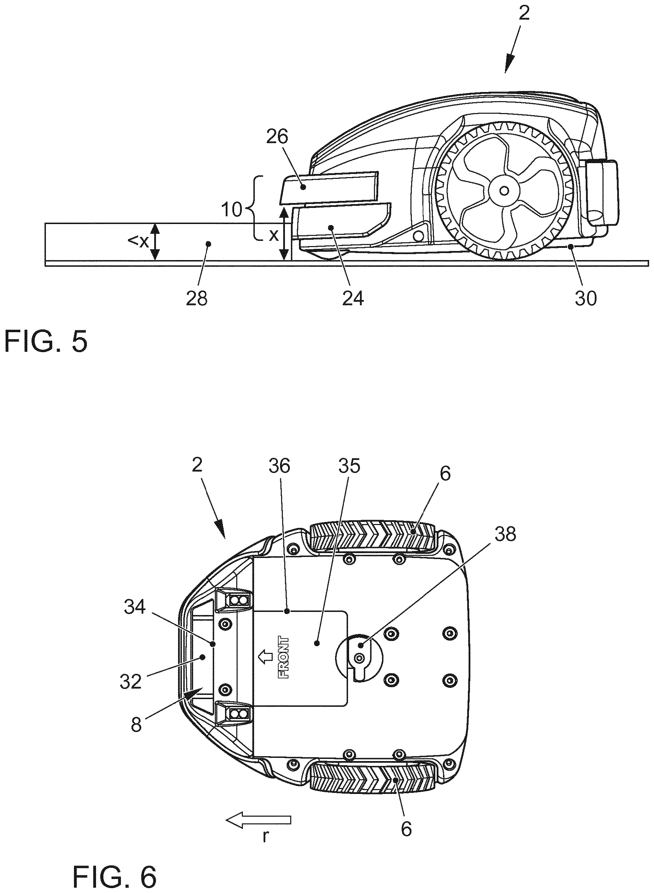

Figur 5 zeigt ein zweites Ausführungsbeispiel eines erfindungsgemäßen Saugroboters 2. Der hier dargestellte Saugroboter 2 unterscheidet sich von dem ersten Ausführungsbeispiel dadurch, dass das federnde Element 10 zweiteilig ausgeführt ist. Es teilt sich somit in ein unteres federndes Element 24 und ein darüber angeordnetes oberes federndes Element 26 auf.

Die federnden Elemente können auch als Bumper bezeichnet werden. Die Höhe x stellt dabei eine Höhe dar, die ein Hindernis 28 maximal haben darf, damit der Saugroboter 2 in der Lage ist, das Hindernis 28 zu überwinden. Dem unteren Bumper 24 ist ein erster Sensor zugeordnet, der registriert, wenn der untere Bumper 24 gedrückt wird, und dem oberen Bumper 26 ist ein zweiter Sensor zugeordnet, der registriert, wenn der obere Bumper 26 gedrückt wird. Registriert nun also der erste Sensor, dass der untere Bumper 24 gedrückt wird, so erhält die Steuerungseinheit die Information, dass der Saugroboter 2 gegen ein Hindernis 28 gefahren ist. Anhand der Daten, die der zweite Sensor liefert, wird nun ermittelt, ob das Hindernis 28 für den Saugroboter 2 überwindbar ist, oder nicht. Falls auch der obere Bumper 26 gedrückt wurde, bedeutet dies, dass das Hindernis eine Höhe hat, die größer als der Wert x ist und somit oberhalb der maximalen für den Saugroboter 2 zu überwindenden Höhe liegt. Registrieren die Sensoren, dass zwar der untere Bumper 24 gedrückt wird, der obere Bumper 26 hingegen nicht, so bedeutet dies, dass zwar ein Hindernis vorliegt, dieses aber eine Höhe hat, die geringer als der Wert x ist und das Hindernis 28 somit für den Saugroboter 2 überwindbar ist. Die Steuereinheit wählt dann ein geeignetes Fahrmanöver aus, um das Hindernis zu überwinden. Typische Hindernisse sind hier beispielsweise die Kanten von Fußmatten im Fußraum eines Kraftfahrzeugs. Zum Zwecke der Überwindung von Hindernissen weist der Saugroboter 2 im hinteren Bereich eine größere Bodenfreiheit als im vorderen Bereich auf. Die Gehäuseunterseite 30 verläuft von hinten nach vorne gesehen bis etwa zur Hälfte des Saugroboters, mindestens aber bis in einen Bereich der Räder 6 hinein leicht abfallend.

Figur 6 zeigt ein drittes Ausführungsbeispiel eines erfindungsgemäßen Saugroboters 2 in einer Ansicht von unten. Die Unterseite 30 des Saugroboters 2 ist im Wesentlichen eben. Der Saugroboter 2 steht zum einen über die Räder 6 und zum anderen über die Saugdüse 8 mit dem Boden in Kontakt. Die Saugdüse 8 weist eine Ansaugöffnung 32 auf, die nach unten und in der primären Fahrtrichtung r gesehen nach vorne geöffnet ist. Die untere Kante 34 der Saugdüse ist dabei eben ausgestaltet, sodass sie bei einem ebenen Untergrund über ihre ganze Breite in Kontakt mit dem Untergrund steht. Diese Ausgestaltung hat den Effekt, dass bei einer Bewegung des Saugroboters 2 in die primäre Fahrtrichtung r, mit anderen Worten also bei einer Vorwärtsbewegung, aufzusaugender Schmutz von der Saugdüse 8 zusammengeschoben wird, so dass dieser unterhalb der Ansaugöffnung 32 platziert wird. Der zusammengekehrte Schmutz wird dadurch dauerhaft in den Einflussbereich der Saugdüse 8 gebracht, von wo aus er durch den erzeugten Luftstrom angesaugt und in das Schmutzreservoir 35 eingebracht wird. Das Schmutzreservoir 35 ist mit einem Deckel 36 verschlossen und kann durch einen mechanischen Schließmechanismus 38 gesichert und geöffnet werden, so dass ein einfaches Entleeren des Schmutzreservoirs 35 möglich ist.

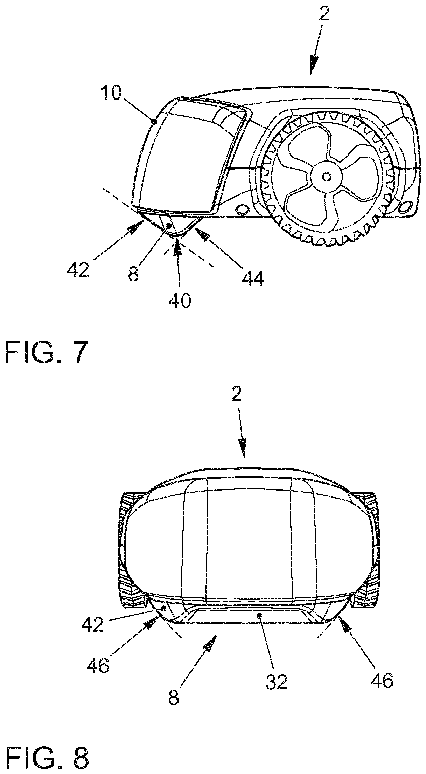

Figur 7 zeigt ebenfalls das dritte Ausführungsbeispiel. Abweichend von dem in den Figuren 1 bis 5 gezeigten Ausführungsbeispielen weist dieser Saugroboter 2 einen einzelnen, an der Vorderseite angeordneten, großen Bumper 10 auf. In der dargestellten Seitenansicht wird die Ausgestaltung der Saugdüse 8 noch einmal deutlich gezeigt. Die Saugdüse 8 steht an ihrem unteren Scheitelpunkt 40 in Kontakt mit dem Boden. Von dem Scheitelpunkt 40 ausgehend weist die Saugdüse 8 sowohl nach vorne wie auch nach hinten hin schräg aufwärts verlaufende Kanten bzw. Flächen 42, 44 auf. Die vordere Fläche 42 der Saugdüse 8 bildet dabei einen Winkel von weniger als 45°, im gezeigten Beispiel von etwa 30° mit der Fußbodenebene. Die hintere Fläche 44 der Saugdüse 8 ist etwas steiler angestellt und bildet in der dargestellten Ausführungsvariante einen Winkel von etwa 40° mit der Fußbodenebene. Der Verlauf der jeweiligen Flächen 42, 44 ist dabei wiederum durch gestrichelte Linien verdeutlicht worden. Andere Winkel zwischen den Flächen 42, 44 und der Fußbodenebene, beispielsweise jeweils 20° bis 50° oder 30° bis 45° sind natürlich ebenfalls möglich.

Figur 8 zeigt eine Frontalansicht des in Figur 7 dargestellten Ausführungsbeispiels. Es ist zu erkennen, dass die vordere Fläche 42 der Saugdüse 8 eine Ausnehmung aufweist, die die Ansaugöffnung 32 bildet. Die Ansaugöffnung 32 nimmt dabei nicht die gesamte Oberfläche der vorderen Fläche 42 der Saugdüse 8 ein, sondern stellt einen grob trapezförmigen Ausschnitt dar, dessen obere Seite etwas kürzer ist als die untere Seite. Weiterhin ist zu erkennen, dass auch die Seitenflächen 46 der Saugdüse 8 schräg ausgestaltet sind und einen Winkel von etwa 45° mit der Fußbodenebene bilden. Eine solche Ausgestaltung der Saugdüse 8 bewirkt insbesondere, dass die Saugdüse 8 auch bei Drehbewegungen des Saugroboters 2 widerstandsarm über den Boden gleitet und ein Hängenbleiben an Hindernissen oder ein sich Verkeilen vermieden wird. Alle Ecken und Kanten der Saugdüse 8 sind abgerundet, um auch punktuell möglichst jede Gefahr eines Verhakens auszuschließen.

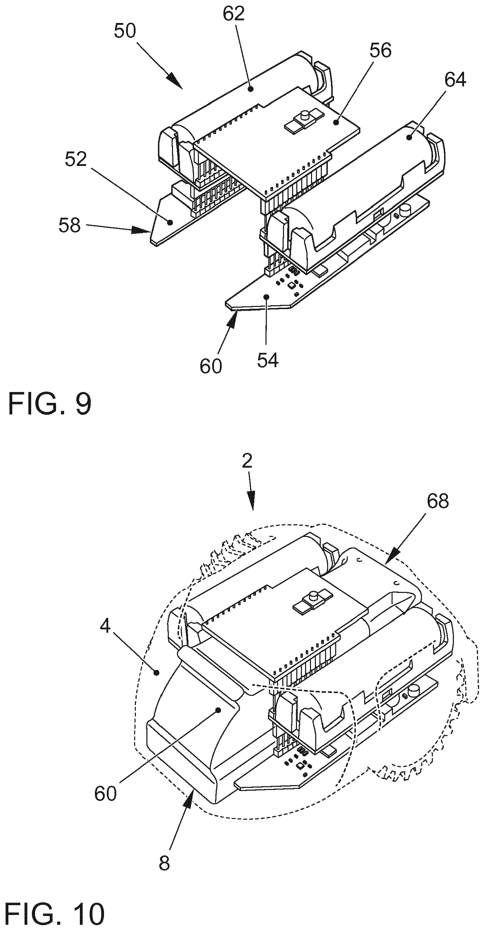

Figur 9 zeigt eine Explosionsdarstellung der Steuereinheit 50. Die Steuereinheit 50 besteht dabei aus drei einzelnen Platinen 52, 54 und 56. Die Platinen 52, 54 und 56 sind über Steckverbindungen miteinander verbunden. Es sind somit keinerlei Kabel oder Lötarbeiten notwendig. Die vorderen Ecken 58, 60 der beiden unteren Platinen 52, 54 sind angeschrägt ausgeführt, so dass sie an den sich verjüngenden Verlauf der Seitenflächen des Gehäuses des Saugroboters angepasst sind. Die beiden unteren Platinen 52, 54 sind im eingebauten Zustand direkt auf dem Gehäuseboden angeordnet. Oberhalb der beiden unteren Platinen 52, 54 sind Energiespeicher 62, 64 angeordnet, die ebenfalls steckbar mit den Platinen verbunden sind. Die Energiespeicher 62, 64 können beispielsweise Lithium-Ionen-Akkupacks sein. Die beiden Energiespeicher 62, 64 sind links und rechts von dem hier nicht dargestellten Saugtrakt angeordnet und bewirken eine symmetrische Belastung des Gehäuses und des Fahrwerks des Saugroboters.

Figur 10 zeigt die in Figur 9 dargestellten Elemente im eingebauten Zustand. Zu erkennen ist über die in Bezug auf Figur 9 beschriebenen Elemente hinausgehend der Saugtrakt 66, der im vorderen Bereich durch die Saugdüse 8 begrenzt wird, und in dessen hinteren Bereich 68 der Saugmotor sowie das Lüfterrad angeordnet sind. Alle beschriebenen Komponenten sind innerhalb des Gehäuses 4 des Saugroboters 2 angeordnet.

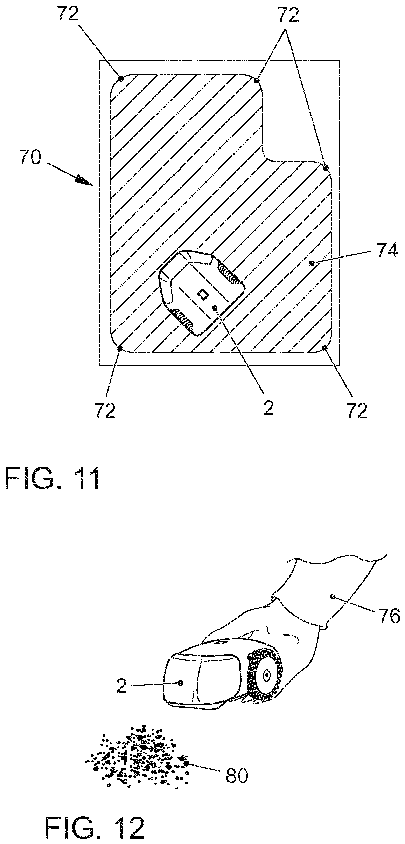

Figur 11 zeigt eine typische Einsatzsituation des erfindungsgemäßen Saugroboters 2 in einer Draufsicht. Der Saugroboter 2 befindet sich hier in einem Fußraum 70 eines Kraftfahrzeugs und reinigt diesen. Der Fußraum 70 ist typischerweise klein und relativ verwinkelt. Durch die kleinen Maße des Saugroboters 2 kann sich dieser dennoch frei in dem Fußraum 70 bewegen. Durch die verkürzte Vorderseite und die am vorderen Rand des Saugroboters 2 angeordnete Saugdüse ist der Saugroboter 2 in der Lage, auch in den Ecken 72 des Fußraums 70 gründlich zu reinigen. Der Saugroboter 2 kann den Boden 74 des Fußraums 70 in einem chaotischen Muster abfahren oder mithilfe von nicht dargestellten Sensoren den Fußraum 70 zunächst vermessen und dann ein geeignetes Fahrmuster zum Reinigen des Fußraums 70 auswählen. Die Leistung des Saugmotors kann hierbei beispielsweise 80 % der Maximalleistung betragen, und der Saugroboter 2 kann sich nach einer von der Steuereinheit berechneten Reinigungszeit selbsttätig abschalten.

Figur 12 zeigt einen erfindungsgemäßen Saugroboter 2, der in einem Handsaugmodus betrieben wird. Dabei wird der Saugroboter 2 von einem Benutzer 76 gehalten und über den aufzusaugenden Schmutz 80 geführt. Der Handsaugmodus zeichnet sich dadurch aus, dass die Bewegungseinheit bzw. die Fahreinheit des Saugroboters 2 in diesem Modus deaktiviert ist und sich die Räder 6 des Saugroboters 2 entsprechend nicht drehen. Der Handsaugmodus kann manuell aktiviert werden, und die Leistung des Saugmotors kann gegenüber dem Automatikmodus erhöht sein und beispielsweise 100 % der maximalen Leistung betragen.

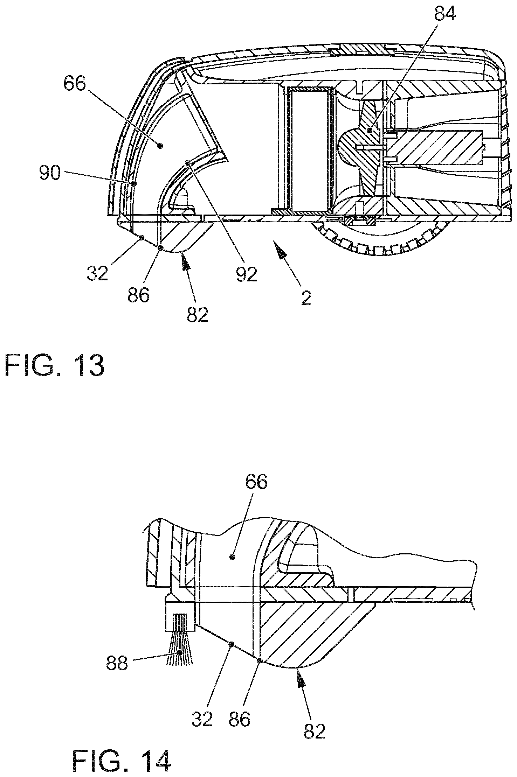

In den Figuren 13 und 14 ist das dritte bzw. vierte Ausführungsbeispiel im Querschnitt dargestellt. Es ist dabei insbesondere die Form der Saugdüse 8 sowie des sich anschließenden Saugtrakts 66 erkennbar. Die Saugdüse 8 weist eine Ansaugöffnung 32 auf, deren Querschnitt einen spitzen Winkel mit der Horizontalen bildet. Die hintere Kante 86 der Ansaugdüse 8 ist in unmittelbarer Nähe des Bodens angeordnet, hat aber keinen physischen Kontakt mit dem Boden. Der Abstand zwischen der hinteren Kante 86 und dem Boden kann beispielsweise 1 mm oder 2 mm betragen. Die Saugdüse 8 ist von der Seite gesehen grob dreiecksförmig ausgestaltet, wobei die Hypotenuse des Dreiecks oben liegt und parallel zur Horizontalen ausgerichtet ist. Die der Hypotenuse gegenüberliegende Ecke des Dreiecks ist abgerundet ausgestaltet und stellt den Auflagepunkt 82 der Saugdüse 8 dar, mit dem Sie in Kontakt mit dem Boden ist und als Auflagepunkt für den gesamten Saugroboter 2 dient. Weiterhin ist in Figur 13 das Lüfterrad 84 erkennbar.

Durch die dargestellte Konstruktion wird die Ansaugöffnung 32 in unmittelbare Nähe des zu entfernenden Schmutzes gebracht. Der Schmutz ist direkt nach Passieren der Ansaugöffnung 32 sowohl von der Umgebung als auch von anderen Teilen, welche nicht dem Abtransport oder der Sammlung des Schmutzes dienen, getrennt und wird auf diese Weise sofort entfernt, indem der Schmutz in den Sammelbehälter transportiert wird. Dadurch wird ein unerwünschtes Verteilen oder Fortschleudern der Schmutzpartikel vermieden und zudem das Sauberhalten des Saugroboters 2 selber gefördert. Die Saugdüse 8 ist so gestaltet, dass ihre aerodynamische Wirkung direkt zum Abheben, Lösen, Verwirbeln, Aufnehmen und Weitertransportieren des Schmutzes dient. Zudem kann die Saugdüse 8 mechanisch-schmutzlösend wirken. Die Saugdüse 8 ist dabei sehr dicht an dem zu reinigenden Untergrund angeordnet und/oder hat sogar Kontakt zu diesem.

Der Saugtrakt 66 weist an der Ansaugöffnung 32 senkrecht nach unten und weitet sich zum Inneren des Saugroboters 2 hin auf, so dass sich sein Querschnitt in Richtung des Lüfterrads 84 hin vergrößert. Gleichzeitig krümmt sich der Saugtrakt 66 hornartig zum Inneren des Saugroboters 2 hin. Die in der primären Fahrtrichtung gesehen vordere Wand 90 des Saugtrakts 66 weist dabei einen geringeren Krümmungsradius auf als die in der primären Fahrtrichtung gesehen hintere Wand 92 des Saugtrakts 66, so dass die angesprochene Aufweitung erreicht wird.

In Figur 14 ist ein Ausschnitt eines weiteren Ausführungsbeispiels analog zu Figur 13 dargestellt. Hier ist zusätzlich ein besenartiger Bürstenkamm 88 vor der Saugdüse 8 angeordnet. Dieser dient der Abdichtung zum Boden sowie einer mechanischen Reinigungswirkung. Der Bürstenkamm 88 kann auch um die Saugdüse 8 umlaufend ausgestaltet sein, so dass er diese dann vollständig umschließt. Der Bürstenkamm 88 ist starr ausgeführt, wird also nicht motorisch angetrieben.

### Bezugszeichenliste

- 2: Saugroboter
- 4: Gehäuse
- 6: Räder
- 8: Saugdüse
- 10: federndes Element/Bumper
- 12: federndes Element/Bumper
- 14: vordere Seitenfläche
- 16: Kraftfahrzeug
- 18: Fußraum
- 20: Vorderseite
- 22: Rückseite
- 24: unteres federndes Element/Bumper
- 26: oberes federndes Element/Bumper
- 28: Hindernis
- 30: Unterseite
- 32: Ansaugöffnung
- 34: untere Kante der Saugdüse
- 35: Schmutzreservoir
- 36: Deckel
- 38: Schließmechanismus
- 40: Scheitelpunkt
- 42: vordere Fläche der Saugdüse
- 44: hintere Fläche der Saugdüse
- 46: Seitenflächen der Saugdüse
- 50: Steuereinheit
- 52: untere Platine
- 54: untere Platine
- 56: obere Platine
- 58: vordere Ecke
- 60: vordere Ecke
- 62: Energiespeicher
- 64: Energiespeicher
- 66: Saugtrakt
- 68: hinterer Bereich des Saugtrakts
- 70: Fußraum
- 72: Ecke
- 74: Boden
- 76: Benutzer
- 80: Schmutz
- 82: Auflagepunkt
- 84: Lüfterrad
- 86: hintere Kante
- 88: Bürstenkamm
- 90: vordere Wand des Saugtrakts
- 92: hintere Wand des Saugtrakts
- r: Fahrtrichtung
- x: Höhe

## Patentansprüche

1. Saugroboter (2) zum autonomen Reinigen eines Fahrzeuginnenraums eines Kraftfahrzeugs (16), mit einem Gehäuse (4) mit einer Gehäuseunterseite (30), einer Fahreinheit (6), einer an der Gehäuseunterseite (30) angeordneten Saugdüse (8), einem Saugmotor und einer Steuerungseinheit (50), wobei das Gehäuse (4) einen kompakten Gehäusegrundkörper aufweist und die Saugdüse (8) an der Gehäuseunterseite (30) des Gehäusegrundkörpers angeordnet ist und der Abstand eines zu einem zweiten Rand (20) des Gehäuses (4) weisenden Rands einer Ansaugöffnung (32) der Saugdüse (8) von einem dem zweiten Rand (20) des Gehäuses (4) gegenüber liegenden ersten Rand (22) des Gehäuses (4) zumindest das 4-fache, bevorzugt zumindest das 6-fache, besonders bevorzugt zumindest das 9-fache eines Abstandes des Rands der Saugdüse (8) von dem zweiten Rand (20) des Gehäuses (4) beträgt, **dadurch gekennzeichnet, dass** der Saugroboter (2) eine Grundfläche von weniger als 200 cm² einnimmt.

2. Saugroboter (2) nach dem vorstehenden Anspruch, **dadurch gekennzeichnet, dass** ein Gesamtvolumen des Saugroboters (2) weniger als 1000 cm³, bevorzugt weniger als 750 cm³, besonders bevorzugt weniger als 500 cm³ beträgt.

3. Saugroboter (2) nach einem der vorstehenden Ansprüche, **dadurch gekennzeichnet, dass** das Gehäuse (4) einen sich in einer Draufsicht gesehen zu dem zweiten Rand (20) des Gehäuses (4) hin verjüngenden Abschnitt aufweist, in dem die Saugdüse (8) angeordnet ist, wobei Seitenflächen (14) des sich verjüngenden Abschnittes mit einer primären Fahrtrichtung (r) des Saugroboters (2) jeweils einen Winkel von weniger als 75°, bevorzugt weniger als 55°, besonders bevorzugt weniger als 40° bilden.

4. Saugroboter (2) nach einem der vorstehenden Ansprüche, **dadurch gekennzeichnet, dass** der zweite Rand (20) des Gehäuses (4) eine Breite aufweist, die weniger als 60%, bevorzugt weniger als 50%, besonders bevorzugt weniger als 40% einer Gesamtbreite des Saugroboters (2) beträgt.

5. Saugroboter (2) nach einem der vorstehenden Ansprüche, **dadurch gekennzeichnet, dass** die Saugdüse (8) aus der Gehäuseunterseite (30) nach unten hervorsteht und dass die Saugdüse (8) zumindest zwei Seitenflächen (42, 44, 46) aufweist, die mit der Horizontalen jeweils einen freien Winkel von weniger als 80°, bevorzugt von weniger als 65°, besonders bevorzugt von weniger als 45°, bilden.

6. Saugroboter (2) nach einem der vorstehenden Ansprüche, **dadurch gekennzeichnet, dass** ein Abstand eines Schwerpunkts eines Lüfterrads von einem Mittelpunkt der Saugdüse (8) zumindest 50 %, bevorzugt 70% und besonders bevorzugt 80% einer Gesamtlänge des Saugroboters (2) beträgt.

7. Saugroboter (2) nach einem der vorstehenden Ansprüche, **dadurch gekennzeichnet, dass** ein Strömungsweg für einen von der Saugdüse (8) zu einem Lüfterrad verlaufenden Luftstrom zwischen der Saugdüse (8) und dem Lüfterrad in einer Projektion auf die Gehäuseunterseite (30) gesehen eine maximale Änderung einer Hauptströmungsrichtung des Luftstroms von insgesamt weniger als 30°, bevorzugt weniger als 15°, besonders bevorzugt weniger als 5° erfährt.

8. Saugroboter (2) nach einem der vorstehenden Ansprüche, **dadurch gekennzeichnet, dass** ein Luftstrom von der Saugdüse (8) durch einen zentralen Bereich (66) des Gehäuses (4) in Richtung des ersten Rands (22) strömt und auf beiden Seiten des Luftstroms Energiespeicher (62, 64) angeordnet sind.

9. Saugroboter (2) nach einem der vorstehenden Ansprüche, **dadurch gekennzeichnet, dass** am zweiten Rand (20) des Gehäuses (4) zumindest zwei drucksensitive Elemente (24, 26) angebracht sind, die eingerichtet sind, um einen Kontakt des Saugroboters (2) mit einem Hindernis (28) zu registrieren, wobei die drucksensitiven Elemente (24, 26) übereinander angeordnet sind.

10. Saugroboter (2) nach einem der vorstehenden Ansprüche, **dadurch gekennzeichnet, dass** sich der Saugroboter (2) mittels der Saugdüse (8) auf dem zu reinigenden Boden abstützt.

## Claims

1. Suction robot (2) for autonomously cleaning a vehicle interior of a motor vehicle (16), having a housing (4) with a housing underside (30), a propulsion unit (6), a suction nozzle (8) arranged on the housing underside (30), a suction motor and a control unit (50), wherein the housing (4) has a compact housing main body and the suction nozzle (8) is arranged on the housing underside (30) of the housing main body, and the distance of an edge of an intake opening (32) of the suction nozzle (8), which edge faces a second edge (20) of the housing (4), from a first edge (22) of the housing (4), the first edge lying opposite the second edge (20) of the housing (4), is at least four times, preferably at least six times, particularly preferably at least nine times a distance of the edge of the suction nozzle (8) from the second edge (20) of the housing (4), **characterized in that** the suction robot (2) takes up an area of less than 200 cm².

2. Suction robot (2) according to the preceding claim, **characterized in that** an overall volume of the suction robot (2) is less than 1000 cm³, preferably less than 750 cm³, particularly preferably less than 500 cm³.

3. Suction robot (2) according to either of the preceding claims, **characterized in that** the housing (4) has a portion which tapers, as seen in a top view, towards the second edge (20) of the housing (4) and in which the suction nozzle (8) is arranged, wherein side surfaces (14) of the tapering portion each form an angle of less than 75°, preferably less than 55°, particularly preferably less than 40°, with a primary direction of travel (r) of the suction robot (2).

4. Suction robot (2) according to one of the preceding claims, **characterized in that** the second edge (20) of the housing (4) has a width which is less than 60%, preferably less than 50%, particularly preferably less than 40% of an overall width of the suction robot (2).

5. Suction robot (2) according to one of the preceding claims, **characterized in that** the suction nozzle (8) protrudes downwards from the housing underside (30), and **in that** the suction nozzle (8) has at least two side surfaces (42, 44, 46) which each form a free angle of less than 80°, preferably of less than 65°, particularly preferably of less than 45°, with the horizontal.

6. Suction robot (2) according to one of the preceding claims, **characterized in that** a distance of a centre of gravity of a fan impeller from a centre point of the suction nozzle (8) is at least 50%, preferably 70% and particularly preferably 80% of an overall length of the suction robot (2).

7. Suction robot (2) according to one of the preceding claims, **characterized in that** a flow path for an air flow, which runs from the suction nozzle (8) to a fan impeller, between the suction nozzle (8) and the fan impeller undergoes a maximum change in a main direction of flow of the air flow of overall less than 30°, preferably less than 15°, particularly preferably less than 5°, in a projection onto the housing underside (30).

8. Suction robot (2) according to one of the preceding claims, **characterized in that** an air flow from the suction nozzle (8) flows through a central region (66) of the housing (4) in the direction of the first edge (22) and energy stores (62, 64) are arranged on both sides of the air flow.

9. Suction robot (2) according to one of the preceding claims, **characterized in that** at least two pressure-sensitive elements (24, 26) are attached to the second edge (20) of the housing (4) and are configured to register contact of the suction robot (2) with an obstacle (28), the pressure-sensitive elements (24, 26) being arranged one above the other.

10. Suction robot (2) according to one of the preceding claims, **characterized in that** the suction robot (2) is supported by means of the suction nozzle (8) on the floor to be cleaned.

## Revendications

1. Robot aspirateur (2) destiné au nettoyage autonome d'un habitacle de véhicule automobile (16), ledit robot aspirateur comportant un boîtier (4) pourvu d'un côté de boîtier inférieur (30), une unité de déplacement (6), une buse d'aspiration (8) disposée sur le côté de boîtier inférieur (30), un moteur d'aspiration et une unité de commande (50), le boîtier (4) comportant un corps de base de boîtier compact et la buse d'aspiration (8) étant disposée sur le côté de boîtier inférieur (30) du corps de base de boîtier et la distance entre un bord, dirigé vers un deuxième bord (20) du boîtier (4), d'une ouverture d'aspiration (32) de la buse d'aspiration (8) et un premier bord (22) du boîtier (4), opposé au deuxième bord (20) du boîtier (4), étant égale à au moins 4 fois, de préférence au moins 6 fois, de manière particulièrement préférée au moins 9 fois, la distance entre le bord de la buse d'aspiration (8) et le deuxième bord (20) du boîtier (4), **caractérisé en ce que** le robot aspirateur (2) occupe une surface de base de moins de 200 cm².

2. Robot aspirateur (2) selon la revendication précédente, **caractérisé en ce que** le volume total du robot aspirateur (2) est inférieur à 1000 cm³, de préférence inférieur à 750 cm³, de manière particulièrement préférée inférieur à 500 cm³.

3. Robot aspirateur (2) selon l'une des revendications précédentes, **caractérisé en ce que** le boîtier (4) comporte une portion qui se rétrécit en direction du deuxième bord (20) du boîtier (4) dans une vue de dessus et dans laquelle la buse d'aspiration (8) est disposée, des surfaces latérales (14) de la portion qui rétrécit formant chacune un angle inférieur à 75°, de préférence inférieur à 55°, de manière particulièrement préférée inférieur à 40°, avec une direction de déplacement primaire (r) du robot aspirateur (2).

4. Robot aspirateur (2) selon l'une des revendications précédentes, **caractérisé en ce que** le deuxième bord (20) du boîtier (4) a une largeur inférieure à 60 %, de préférence inférieure à 50 %, de manière particulièrement préférée inférieure à 40 %, de la largeur totale du robot aspirateur (2).

5. Robot aspirateur (2) selon l'une des revendications précédentes, **caractérisé en ce que** la buse d'aspiration (8) fait saillie vers le bas depuis le côté de boîtier inférieur (30) et **en ce que** la buse d'aspiration (8) comporte au moins deux surfaces latérales (42, 44, 46) qui forment chacune un angle libre inférieur à 80°, de préférence inférieur à 65°, de manière particulièrement préférée inférieur à 45°, avec l'horizontale.

6. Robot aspirateur (2) selon l'une des revendications précédentes, **caractérisé en ce qu'**une distance entre le centre de gravité d'une roue de ventilateur et un point central de la buse d'aspiration (8) est au moins 50 %, de préférence 70 % et de manière particulièrement préférée 80 %, de la longueur totale du robot aspirateur (2).

7. Robot aspirateur (2) selon l'une des revendications précédentes, **caractérisé en ce que**, entre la buse d'aspiration (8) et la roue de ventilateur, un chemin d'écoulement d'un flux d'air allant de la buse d'aspiration (8) à la roue de ventilateur, selon une projection sur le côté de boîtier inférieur (30), subit une variation maximale de la direction d'écoulement principale du flux d'air de moins de 30°, de préférence de moins de 15°, de manière particulièrement préférée de moins de 5°.

8. Robot aspirateur (2) selon l'une des revendications précédentes, **caractérisé en ce qu'**un flux d'air s'écoule de la buse d'aspiration (8) à travers une zone centrale (66) du boîtier (4) en direction du premier bord (22) et des accumulateurs d'énergie sont disposés des deux côtés du flux d'air (62, 64) .

9. Robot aspirateur (2) selon l'une des revendications précédentes, **caractérisé en ce qu'**au moins deux éléments (24, 26) sensibles à la pression sont fixés au deuxième bord (20) du boîtier (4) et sont conçus pour empêcher le robot aspirateur (2) de venir en contact avec un obstacle (28), les éléments (24, 26) sensibles à la pression étant disposés l'un au-dessus de l'autre.

10. Robot aspirateur (2) selon l'une des revendications précédentes, **caractérisé en ce que** le robot aspirateur (2) prend appui sur le sol à nettoyer au moyen de la buse d'aspiration (8).
